Europäisches Patentamt

European Patent Office

Office européen des brevets

(11) Veröffentlichungsnummer: **0 350 756**
**A2**

## (12) EUROPÄISCHE PATENTANMELDUNG

(21) Anmeldenummer: 89112118.8

(51) Int. Cl.⁴: **B65G 59/02**

(22) Anmeldetag: 03.07.89

(30) Priorität: 14.07.88 DE 3823855

(43) Veröffentlichungstag der Anmeldung:
**17.01.90 Patentblatt 90/03**

(84) Benannte Vertragsstaaten:
**CH DE FR GB GR IT LI NL**

(71) Anmelder: **Ruhl, Heinz**
**Manigoldstrasse 5**
**D-8703 Ochsenfurt(DE)**

(72) Erfinder: **Ruhl, Heinz**
**Manigoldstrasse 5**
**D-8703 Ochsenfurt(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) **Vorrichtung zur Vereinzelung von übereinander gestapelten Baustahlmatten.**

(57) Gegenstand der Erfindung ist eine Vorrichtung zur Vereinzelung von Baustahlmatten (1), die übereinander gestapelt sind. Die Baustahlmatten (1) sind auf einem vertikal in wählbaren Höhenlagen einstellbaren Träger (2) angeordnet. In einer vorgegebenen Höhe über dem Träger (2) sind eine Reihe von im Abstand voneinander parallel angeordneten, an ihren Enden mit einem Antriebsmechanismus verbundenen Wellen (7) horizontal zwischen dem Stapel und den zu vereinzelnden Baustahlmatten (1) hindurchbewegbar. Die Wellen (7) dienen gleichzeitig dazu, die vereinzelten Baustahlmatten (1) von dem Träger (2) weg z.B. einer Schneideinrichtung zuzuführen.

EP 0 350 756 A2

FIG.1

## Vorrichtung zur Vereinzelung von übereinander gestapelten Baustahlmatten

Die Erfindung bezieht sich auf eine Vorrichtung zur Vereinzelung von Baustahlmatten, die übereinander gestapelt sind.

Baustahlmatten werden in standardisierten Abmessungen in Lagern auf Stapel vorrätig gehalten. Die benötigte Menge von Baustahlmatten wird jeweils von einem Stapel entnommen. Aufgrund ihres großen Durchbiegevermögens und wegen der stiftförmig nach außen ragenden Enden der Baustahlmattenstäbe kommt es häufig zu Verhakungen zwischen den Baustahlmatten eines Stapels. Die Baustahlmatten müssen dann umständlich und zeitraubend voneinander gelöst werden, damit eine gewünschte Anzahl von Baustahlmatten vom Stapel abgezogen werden können.

Der Erfindung liegt die Aufgabe zugrunde, eine Vorrichtung zur Vereinzelung übereinander gestapelter Baustahlmatten zu entwickeln, mit der jeweils eine gewünschte Anzahl von Baustahlmatten eines Stapels vom Stapel abgehoben werden kann.

Die Aufgabe wird erfindungsgemäß dadurch gelöst, daß die übereinander gestapelten Baustahlmatten auf einem Träger angeordnet sind und daß in einer vorgegebenen Höhe über dem Träger parallel angeordnete, an ihren Enden mit einem Antriebsmechanismus verbundene stabförmige Elemente wie Wellen zwischen die zu vereinzelnde Baustahlmatte bzw. zu vereinzeln den Baustahlmatten und die darunterliegende Baustahlmatte hineinbewegbar sind. Dabei wird bzw. werden zunächst die zu vereinzelnde bzw. zu vereinzelnden Baustahlmatten vorzugsweise von Hand auf der Seite angehoben, von der aus die Wellen in die Lücke zwischen den Matten hineinbewegt werden sollen. Die erste Welle drückt die zu vereinzelnde Baustahlmatte nach oben, so daß diese von den darunterliegenden getrennt wird. Bei weiterer Bewegung der Wellen zu anderen Enden der Baustahlmatte hin ist diese vollständig vom Stapel getrennt. Wird nun die Bewegungsrichtung der Bewegung der Wellen umgekehrt, wird die vereinzelte Matte mit transportiert und gegebenenfalls einer Schneideinrichtung zugeführt. Bei der Schneideinrichtung kann es sich zum einen um eine stationär angeordnete Schlagschere handeln, mittels der die Matte in gewünschter Länge zurechtgeschnitten werden kann. Zwischen der Schlagschere und dem Mattenstapel kann ferner eine zweite parallel zur Schlagschere verschiebbare Schneideinrichtung wie Schneidrollen angeordnet sein, um die Matte in der gewünschten Breite zurechtzuschneiden.

Bei einer bevorzugten Ausführungsform sind die Wellen nahe an ihren Enden jeweils mit Kettengliedern von seitlich neben dem Träger angeordneten, motorisch angetriebenen, endlosen Ketten verbunden, die jeweils von an vier Ecken eines Vierecks angeordneten Zahnrädern umgelenkt werden, wobei im Zuge der Ketten mindestens ein Abschnitt, der in etwa dem horizontalen Abstand zwischen den Zahnrädern entspricht, frei von Wellen ist. Mit dieser Vorrichtung werden die Ketten nebst Wellen auf einfache Weise gemeinsam angetrieben.

Wenn die Wellen aus dem Bereich der vorgegebenen Höhe herausbewegt worden sind, kann der vorzugsweise höhenverstellbar ausgebildete Träger ein Stück angehoben werden, damit die zu oberst liegende Baustahlmatte in den Bewegungsbereich gelangt.

Es ist zweckmäßig, wenn die Wellen über die Kettenglieder hinausragende Enden aufweisen, auf denen Rollen drehbar gelagert sind, die in horizontalen Schienen geführt sind, die sich längs der vorgegebenen Höhe über mindestens eine der Ausdehnung des Trägers entsprechende Länge erstrecken. Die Schienen sorgen dafür, daß die Wellen genau geführt werden. Das Gewicht der auf den Wellen abgelegten Baustahlmatte wird von den Schienen aufgenommen, so daß sich die Ketten nicht durchbiegen. Darüber hinaus wird die Position der vereinzelten Baustahlmatte exakt festgelegt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

Fig. 1 eine Vorrichtung zur Vereinzelung von Baustahlmatten in Seitenansicht,

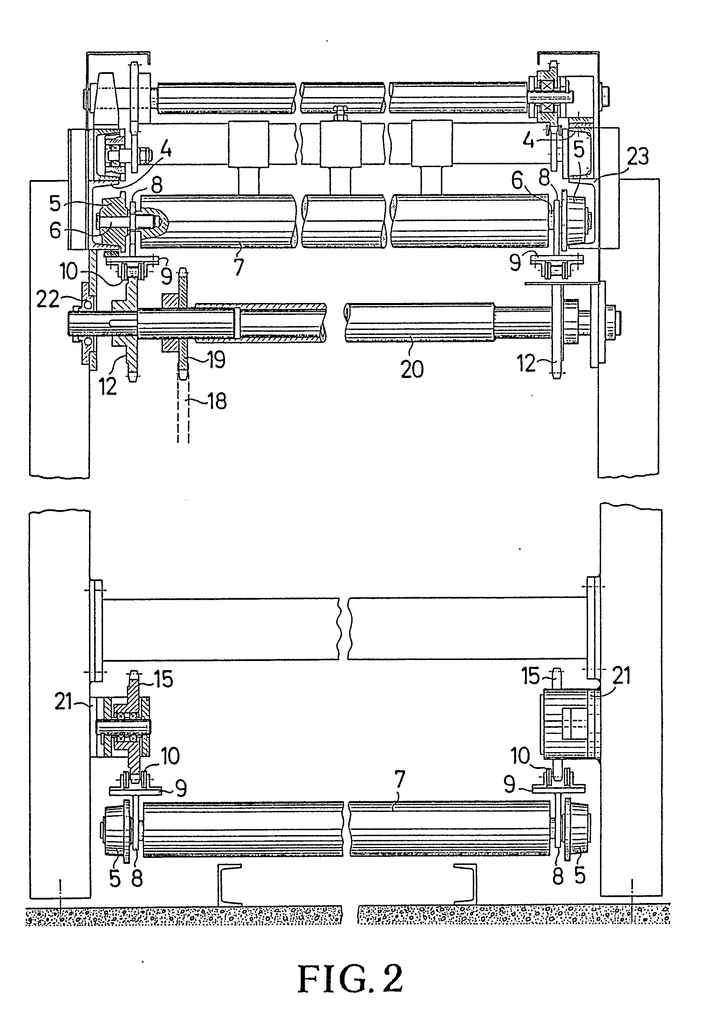

Fig. 2 einen Schnitt längs der Linien II-II der in Fig. 1 dargestellten Vorrichtung und

Fig. 3 eine Anordung zur Lagerung, Vereinzelung und zum Schneiden von Baustahlmatten in Draufsicht.

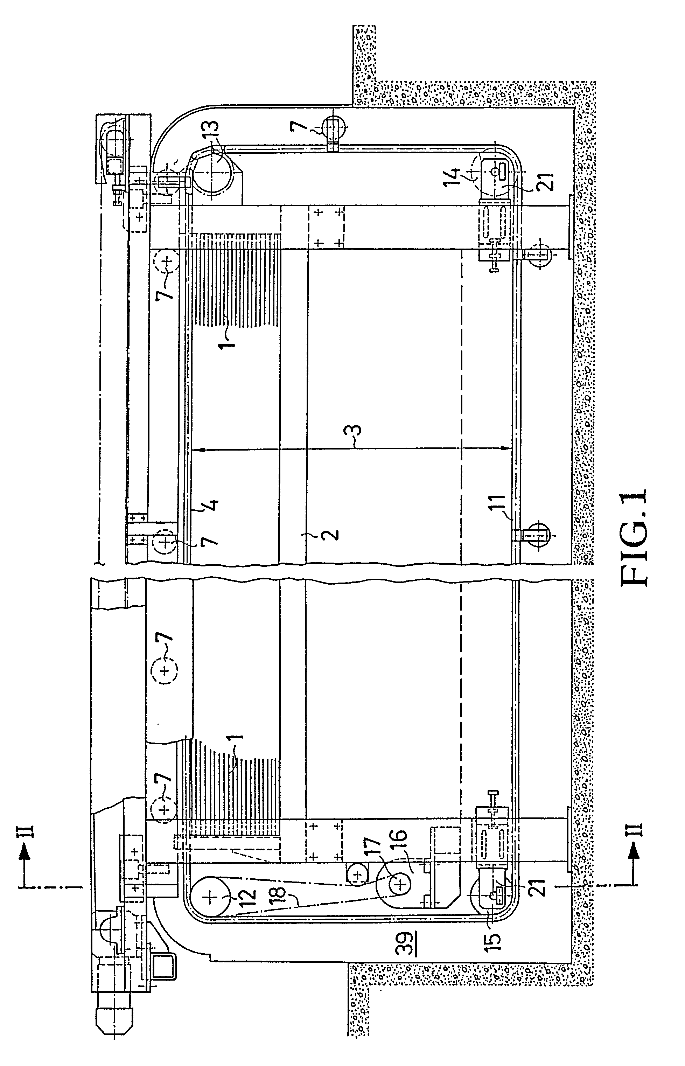

Eine Vorrichtung zur Vereinzelung von übereinander gestapelten Baustahlmatten (1), die in Fig. 1 in Seitenansicht schematisch dargestellt sind, enthält einen Träger (2) z.B. in Form eines Rahmens, auf der die Baustahlmatten (1) übereinanderliegen. Der Träger (2) ist vertikal bewegbar und in unterschiedlichen Höhen fixierbar. Beispielsweise ist der Träger (2) hydraulisch antreibbar. In einer eingestellten Höhe (3) über der unteren Endlage des Trägers (2) und vorzugsweise parallel zu diesem verlaufend befinden sich seitlich neben dem horizontalen Umriß des Trägers im Abstand voneinander zwei Schienen (4) in Form von U-Profilen, deren offenen Seiten einander zugewandt sind. In den Schienen (4) sind Rollen (5) abrollbar angeordnet, die auf Achsen (6) befestigt sind, die mit Wellen (7) verbunden sind. Jede Welle (7) weist somit an ihren beiden Enden Achsen (6) auf, mit denen die Rollen (5) verbunden sind. Zwischen jeder der Rollen (5) und den entsprechenden Enden der Wellen (7) ist ein Zwischenraum vorgesehen, in den eine Mitnehmerscheibe (8) ragt, die eine Bohrung aufweist, durch die jeweils eine der Achsen (6) hindurchragt. Die Mitnehmerscheibe (8) ist über ein Verbindungsstück (9) mit einem Kettenglied einer endlosen Kette (11) verbunden, die über vier Zahnräder (12), (13), (14, (15) geführt ist, die sich an den Enden eines Viereckes befinden, das vertikale und horizontale Seiten hat und in einer vertikalen Ebene liegt. Zwei endlose Ketten (11) mit den entsprechenden Zahnrädern (12), (13), (14), (15) befinden sich demnach in paralleler Anordnung beiderseits des Trägers (2). Die Ketten (11) sind motorisch angetrieben. Ein Motor (16) ist mit seinem Ritzel (17) über eine Kette (18) mit einem Zahnrad (19) verbunden, das auf einer Welle (20) sitzt, die die beiden Zahnräder miteinander verbindet. Die Zahnräder (14) und (15) werden jeweils von horizontal in verschiedene Positionen einstellbaren Lagerplatten (21) gehalten, mit denen die Ketten (11) gespannt werden. Die Wellen (20) der Zahnräder (12) und (13) sind mit ihren Enden in ortsfesten Lagern (22) drehbar gelagert. Mehrere Wellen (7) sind in einem Kettenabschnitt, der der Länge zwischen den Zahnrädern (12), (13) entspricht, im Abstand voneinander angeordnet. Zwischen diesem Abschnitt befindet sich ein größerer wellenloser Abschnitt, dessen Länge dem horizontalen Abstand zwischen zwei Zahnrädern (12), (13) bzw. (14), (15) entspricht.

Um einen großen Stapel von Baustahlmatten (1) aufnehmen zu können, erstreckt sich die Vorrichtung auch in eine Grube (39). Der Träger (2) bzw. die auf diesem gelagerten Baustahlmatten (1) sind von oben in einer Stellung der Ketten (11) frei zugänglich, bei der keine Wellen (7) im Raum oberhalb des Trägers (2) vorhanden sind. Die Baustahlmatten (1) können dann z.B. mittels eines Krans auf dem Träger (2) abgelegt werden. Seitlich des in einem Rahmen angeordneten Trägers (2) können Laufstege für das Bedienungspersonal angeordnet sein.

Die Vereinzelung von Baustahlmatten läuft in nachstehenderweise ab. Dabei wird der Ablauf an Hand der Vereinzelung einer Matte beschrieben, gleichwenn selbstverständlich gleichzeitig auch mehrere Matten vereinzelt werden können.

Zuerst wird der Träger (2) in eine solche Höhe gefahren, daß die zu oberst liegende Baustahlmatte (1) in den Bereich der Schienen (4) gelangt. Die Einstellung kann durch Handsteuerung des Hubantriebes für den Träger (2) erfolgen. Es ist auch möglich, die Hubbewegung durch einen in Höhe der Schienen (4) angeordneten Endschalter zu beenden. Danach wird die zu oberst liegende Baustahlmatte (1) an einer Seite, z.B. die den Zahnrädern (13) zugewandte Seite, vorzugsweise per Hand angehoben. In diesem Verfahrenszustand befinden sich selbstverständlich noch keine Wellen über der zu oberst liegenden Baustahlmatte (1).

Nach dem Anheben wird der Motor (16) eingeschaltet, der über die Kette (18) die Welle (20) mit den Zahnrädern (12) antreibt, die die Kettenenden in Bewegung versetzt. Die Ketten (11) ziehen die Wellen (7) im Ausführungsbeispiel entgegen dem Uhrzeigersinn in den Spalt zwischen der zu oberst angeordneten Baustahlmatte (1) und der darunter liegenden Baustahlmatte. Die Ketten (11) ziehen die weiteren Wellen (7) zwischen der zu oberst liegenden Baustahlmatte (1) und der darunter liegenden Baustahlmatte hindurch. Hierbei lösen sich Verhakungen, die eventuell zwischen den Baustahlmatten vorhanden sind. Die zuerst in den Spalt eingedrungene Welle (7) bewegt den Beginn des Spaltes bis zum Ende der Baustahlmatte. Die bereits angehobenen Abschnitte der Baustahlmatte (1) legen sich auf die nachfolgenden Wellen (7) auf. Auf diese Weise wird die zu oberst angeordnete Welle (1) auch bei Verhakungen der freistehenden Enden mit den darunter liegenden Baustahlmatten (1) durch die Kraft der Wellen (7) völlig vom Stapel getrennt. Die Trennung ist vollendet, wenn die Baustahlmatte (1) auf einer Reihe von entlang der Schienen (4) angeordneten Wellen (7) liegt. Anschließend werden die Wellen (17) durch Umschalten des Motors (16) wieder aus der Zone oberhalb der Baustahlmatten entfernt, also im Uhrzeigersinn bewegt. Hierdurch bedingt wird die Baustahlmatte (1) im Ausführungsbeispiel nach rechts bewegt, um der Schneideinrichtung (27) und (28) zugeführt zu werden, durch die der Träger (1) in gewünschtem Maße zurechtgeschnitten wird.

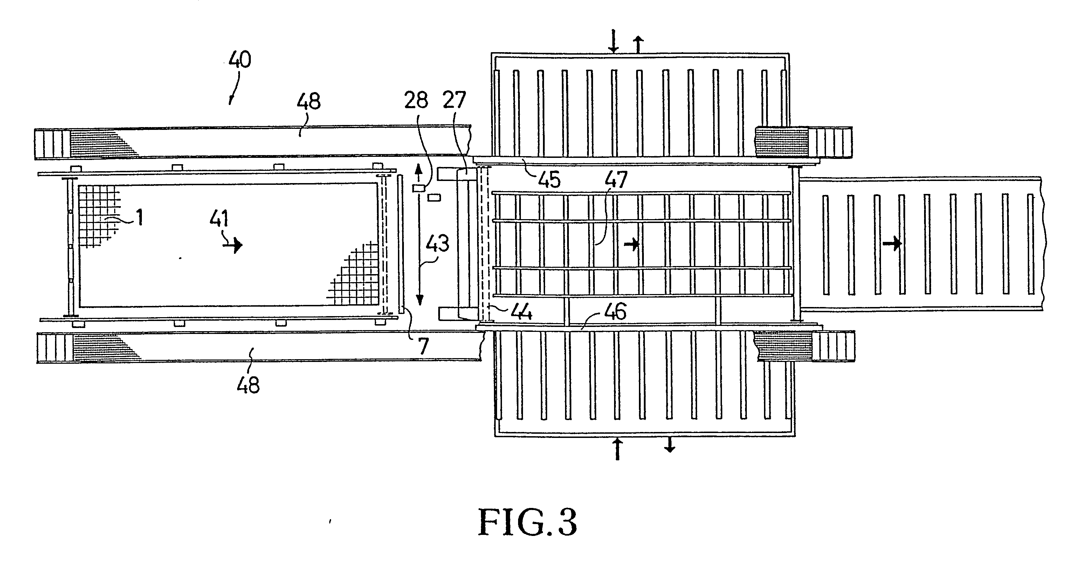

In Fig. 3 ist in Draufsicht eine Anordnung zum Bearbeiten von Baustahlmatten (1) dargestellt, die mit der zuvor beschriebenen Vorrichtung, die in Fig. 3 mit dem Bezugszeichen (40) versehen ist, vereinzelt werden, um den Schneideinrichtungen (27), (28) zugeführt zu werden, durch die ein Zurechtschneiden in der gewünschten Größe erfolgt. Der Transport von der Vorrichtung (40) zu den Schneideinrichtungen (27) und (28) erfolgt erwähntermaßen durch Bewegung der Wellen (7) in Richtung des Pfeils (41), so daß die Baustahlmatten (1) im Ausführungsbeispiel nach rechts bewegt werden, um bezüglich ihrer Länge durch die Schneidvorrichtung (27) im Form einer Schlagschere und in ihrer Breite durch die Schneideinrichtung (28) vorzugsweise in Form von Schneidrollen zurechtgeschnitten zu werden. Hierzu ist die Schneideinrichtung (28) parallel zu der Schneideinrichtung (27) verschiebbar, was durch den Pfeil (43) angedeutet ist. Ferner ist der Schlagschere (27) ein Anschlag (44) zugeordnet, der in Führungen (45) und (46) entlang der Rollenbahn (47) verschiebbar ist.

Das Zuführen der Baustahlmatten (1) zu den Schneideinrichtungen (27) und (28) bzw. der Rollenbahn (47) kann durch Bedienungspersonal unterstützt werden, die sich auf seitlich der Vorrichtung angeordneten Laufstegen (48) bewegen können. Nachdem die Baustahlmatten (1) zurechtgeschnitten wurden, können sie weiteren, seitlich und hinter der Rollenbahn (47) angeordneten Rollenbahnen und sodann ggfls. weiteren Magazinen oder ähnlichem zugeführt zu werden.

**Ansprüche**

1. Vorrichtung zur Vereinzelung von Baustahlmatten (1), die übereinander gestapelt sind, **dadurch gekennzeichnet,** daß die übereinander gestapelten Baustahlmatten (1) auf einem Träger (2) angeordnet sind und daß in einer vorgegebenen Höhe über dem Träger (2) parallel angeordnete, an ihren Enden mit einem Antriebsmechanismus verbundene stabförmige Elemente (7) in einen zwischen den jeweils zu vereinzelnde Baustahlmatten (1) und den darunter liegenden Baustahlmatten (1) gebildeten Spalt hineinbewegbar sind.

2. Vorrichtung nach Anspruch 1, **dadurch gekennzeichnet,** daß die stabförmigen Elemente (7) vorzugsweise Wellen sind, die nahe an ihren Enden jeweils mit Kettengliedern (10) von seitlich neben dem Träger (2) angeordneten, motorisch angetriebenen, endlosen Ketten (11) verbunden sind, die jeweils von an vier Ecken eines Vierecks angeordneten Zahnrädern (12, 13, 14, 15) umgelenkt werden, und daß im Zuge der Ketten (11) mindestens ein Abschnitt, der in etwa dem horizontalen Abstand zwischen den Zahnrädern entspricht, frei von Wellen (7) ist.

3. Vorrichtung nach Anspruch 2, **dadurch gekennzeichnet,** daß die Enden der Wellen (7) drehbar gelagerte Rollen (5) aufweisen, die in horizontalen Schienen (4) geführt sind, die sich längs der vorgegebenen Höhe über mindestens eine der Ausdehnung des Trägers (2) entsprechende Länge erstrecken.

4. Vorrichtung nach Anspruch 1, **dadurch gekennzeichnet,** daß die vereinzelte Baustahlmatte (1) von dem Baustahlmattenstapel durch Bewegungsrichtungsumkehr der stabfömigen Elemente (7) entfernbar und vorzugsweise zumindest einer Schneideinrichtung (27,28) zuführbar ist.

5. Vorrichtung nach Anspruch 4, **dadurch gekennzeichnet,** daß eine erste Schneideinrichtung (27) vorzugsweise in Form einer Schlagschere im Abstand und parallel zu der Stirnseite des Trägers (2) angeordnet ist.

6. Vorrichtung nach Anspruch 5, **dadurch gekennzeichnet,** daß zwischen der Stirnseite und der ersten Schneideinrichtung (27) eine zweite parallel zu der ersten Schneideinrichtung verstellbare zweite Schneideinrichtung (28) angeordnet ist.

7. Vorrichtung nach Anspruch 1, **dadurch gekennzeichnet,** daß der Träger (2) in vorzugsweise einem Rahmen höhenverstellbar angeordnet ist.

FIG.1

EP 0 350 756 A2

FIG.2

FIG.3